# EUROPEAN PATENT APPLICATION

(11) **EP 4 637 053 A1**
(43) Date of publication of application: **22.10.2025**
(21) Application number: 23905625.2
(22) Date of filing: 27.11.2023
(51) Int. Cl.: H04B 10/60

(54) **BURST-MODE OPTICAL RECEIVER AND OPERATION METHOD THEREFOR, AND STORAGE MEDIUM**

(30) Priority: 19.12.2022 CN 202211629663
(71) Applicant: ZTE CORPORATION, Shenzhen, Guangdong 518057 (CN)
(72) Inventor: YIN, Yongjia, Shenzhen, Guangdong 518057 (CN); TONG, Zhiqiang, Shenzhen, Guangdong 518057 (CN); HE, Jiangyan, Shenzhen, Guangdong 518057 (CN); LI, Weizhong, Shenzhen, Guangdong 518057 (CN)
(74) Representative: Ziebig Hengelhaupt Intellectual Property Attorneys Patentanwaltskanzlei PartGmbB
(86) International application number: PCT/CN2023/134466
(87) International publication number: WO 2024/131457

(57) **Abstract**

The present application relates to the technical field of optical fiber communications, and discloses a burst-mode optical receiver, an operation method for the burst-mode optical receiver, and a computer storage medium. The optical receiver comprises a photodiode, a first amplifier, and an SD signal generator, the first amplifier is a transimpedance amplifier, the input end of the transimpedance amplifier is connected to the positive pole of the photodiode; the input end of the SD signal generator is connected to the input end of the transimpedance amplifier; and the signal output end of the SD signal generator is separately connected to respective reset ends of the transimpedance amplifier and a local device.

## Description

### CROSS-REFERENCE TO RELATED APPLICATIONS

The present application claims priority of Chinese Patent Application No. 202211629663.0, filed on Dec. 19, 2022, the entire contents of which are incorporated by reference in the present application.

### TECHNICAL FIELD

The present application relates to the technical field of optical fiber communication, and in particular, to a burst-mode optical receiver, an operation method for a burst-mode optical receiver, and a computer storage medium.

### BACKGROUND

During PON (passive optical network) system registration, the OLT (optical line terminal) device issues a registration time window, and the ONU (optical network unit) device to be registered sends a burst registration frame signal in the upstream direction after a random delay in the windowing period. Since the MAC (Media Access Control) layer of the OLT device does not know the exact time at which the burst registration frame arrives at the OLT device, a burst reset signal (RESET signal) cannot be sent to the OLT device to achieve a fast recovery of the burst signal frame, which results in a long delay of the ONU device during the registration phase of the PON system.

To improve the above, the current PON system incorporates an SD (Signal Detect) function at the limited amplifier of the receiving front end of the OLT device for the reset of the OLT device to quickly recover the burst signal frame, thereby speeding up the registration process of the upstream burst signal. However, the burst signal frame recovered by the method described above is still delayed to some extent, resulting in a slower registration process for the upstream burst signal and limiting its performance in low-delay application scenarios.

### SUMMARY

The main object of the present application is to provide a burst-mode optical receiver, an operation method for a burst-mode optical receiver, and a computer storage medium. The aim is to enable the rapid generation of burst SD signals for the quick reset of both the receiving front end and the MAC layer of the OLT device in low-delay application scenarios, thereby effectively reducing the link delay of the ONU device during the registration phase of the PON system.

To achieve the above object, the present application provides a burst-mode optical receiver including: a photodiode, a first amplifier, and an SD signal generator;
the first amplifier is a trans-impedance amplifier, an input end of the trans-impedance amplifier is connected to a positive pole of the photodiode; and
an input end of the SD signal generator is connected to the input end of the trans-impedance amplifier; and a signal output end of the SD signal generator is separately connected to respective reset ends of the trans-impedance amplifier and a local device.

Further, to achieve the above object, the present application also provides a burst-mode optical receiver including: a photodiode, a trans-impedance amplifier and an SD signal generator;
the trans-impedance amplifier is connected to a positive pole of the photodiode; and
an input end of the SD signal generator is connected to an output end of the trans-impedance amplifier, and a signal output end of the SD signal generator is separately connected to respective reset ends of the trans-impedance amplifier and a local device.

Further, to achieve the above object, the present application also provides an operation method for a burst-mode optical receiver, the operation method being applied to the burst-mode optical receiver as described above, the operation method including:
when a terminal device of a PON system reports burst registration frame information, converting, via the photodiode, a burst optical signal arriving at the optical receiver into a burst electrical signal;
coupling, via the SD signal generator, the burst electrical signal at the trans-impedance amplifier to obtain an energy burst electrical signal, and generating a reset signal based on the energy burst electrical signal; and
transmitting the reset signal to respective reset ends of the trans-impedance amplifier and/or the local device to cause the trans-impedance amplifier and/or the local device to generate a reset action.

Further, to achieve the above object, the present application also provides a receiving front end, the receiving front end includes a memory, a processor, a burst-mode optical receiver as described above, and a running program stored on the memory and executable on the processor, the running program, when executed by the processor, implementing the steps of the operation method for a burst-mode optical receiver as described above.

Further, to achieve the above object, the present application also provides a computer storage medium having stored thereon a running program which, when executed by a processor, implements the steps of the operation method for a burst-mode optical receiver as described above.

Further, to achieve the above object, the present application also provides a computer program product including a computer program which, when executed by a processor, implements the steps of the operation method for a burst-mode optical receiver as described above.

### BRIEF DESCRIPTION OF DRAWINGS

FIG. 1 is a schematic diagram of a system architecture in accordance with an embodiment of a burst-mode optical receiver of the present application;
FIG. 2 is a schematic diagram of another system architecture in accordance with an embodiment of a burst-mode optical receiver of the present application;
FIG. 3 is a schematic diagram of a scenario in which energy coupling is achieved by designing an impedance coupling circuit in accordance with an embodiment of a burst-mode optical receiver of the present application;
FIG. 4 is a schematic diagram of a scenario in which energy coupling is achieved by designing a capacitive-reactance coupler in accordance with an embodiment of a burst-mode optical receiver of the present application;
FIG. 5 is a schematic diagram of an SD signal in accordance with an embodiment of a burst-mode optical receiver of the present application;
FIG. 6 is a schematic diagram of another system architecture in accordance with an embodiment of a burst-mode optical receiver of the present application;
FIG. 7 is a schematic diagram of another implementation principle of impedance coupling in accordance with an embodiment of a burst-mode optical receiver of the present application;
FIG. 8 is a flowchart of steps involved in an embodiment of an operation method for the burst-mode optical receiver of the present application; and
FIG. 9 is a schematic diagram of a device structure of the hardware operating environment for a terminal device involved in the embodiment solution of the present application.

The realization of the object, functional features and advantages of the present application will be further explained with reference to the accompanying drawings and in conjunction with the embodiments.

### DETAILED DESCRIPTION

It should be understood that the specific embodiments described herein are merely for illustration of the present application and are not intended to limit the present application.

The PON is a point-to-multipoint architecture, and employs TDMA (Time Division Multiple Access) in the upstream direction, enabling the data frames arriving at the OLT local device from different ONU devices are bursty.

During PON system registration, the OLT device issues a registration time window, and the ONU device to be registered sends a burst registration frame signal in the upstream direction after a random delay in the windowing period. Since the MAC layer of the OLT device does not know the exact time at which the burst registration frame arrives at the OLT device, a burst reset signal (RESET signal) cannot be sent to the OLT device to achieve a fast recovery of the burst signal frame, which results in a long delay of the ONU device during the registration phase of the PON system.

To improve the above, the current PON system incorporates an SD (Signal Detect) function at the limited amplifier (LA) of the receiving front end, such as the optical receiver, of the OLT device for the reset of the OLT device to quickly recover the burst signal frame, thereby speeding up the registration process of the upstream burst signal. However, during research, it was discovered that an AC coupling method using series-connected capacitors is generally employed between the Trans-Impedance Amplifier (TIA) and the LA at the receiving front end, such as the optical receiver, of the OLT device. Consequently, when the upstream burst signal frame passes through the capacitors, the charging and discharging effects of the capacitors consume the setup time of the burst signal frame, leading to an additional delay in the recovered SD signal.

In view of the above problem, the present application provides a burst-mode optical receiver, which can quickly generate SD signals that are synchronized with the upstream burst signal frames, accelerate reset of the PON receiving front end, and shorten the ONU registration delay.

In an embodiment of the present application, the present application provides a burst-mode optical receiver, including: a photodiode, a first amplifier, and an SD signal generator; the first amplifier is a trans-impedance amplifier, an input end of the trans-impedance amplifier is connected to a positive pole of the photodiode; an input end of the SD signal generator is connected to the input end of the trans-impedance amplifier, and a signal output end of the SD signal generator is separately connected to respective reset ends of the trans-impedance amplifier and a local device.

As such, compared to the traditional approach where the physical layer link at the receiving front end, such as the optical receiver, employs the AC coupling method using the series-connected capacitors and performs signal detection at the LA, which results in the additional delay in the SD signal recovered by the physical layer link, this application utilizes the SD signal generator to couple a portion of the burst electrical signal at the trans-impedance amplifier (TIA). This enables the rapid generation of the burst SD signal for the rapid reset of both the receiving front end and the MAC layer of the OLT device, thereby effectively reducing the link delay of the ONU device during the registration phase of the PON system.

Based on the general concept of the burst-mode optical receiver of the present application described above, various embodiments of the burst-mode optical receiver of the present application are proposed.

In a first embodiment of the burst-mode optical receiver of the present application, the burst-mode optical receiver of the present application includes: a photodiode, a first amplifier, and an SD signal generator;
the first amplifier is a trans-impedance amplifier, an input end of the trans-impedance amplifier is connected to a positive pole of the photodiode; and
an input end of the SD signal generator is connected to the input end of the trans-impedance amplifier; and a signal output end of the SD signal generator is separately connected to respective reset ends of the trans-impedance amplifier and a local device.

In this embodiment, the SD signal is extracted at a Trans-Impedance Amplifier (TIA), enabling fast generation of a burst SD signal. This SD signal quickly resets the trans-impedance amplifier at the receiving front end, such as the optical receiver, and the local device MAC of the OLT device to shorten the link delay of the ONU device during the registration phase.

In this embodiment, the photodiode may be a PIN photodiode or it may be replaced by an avalanche photodiode (APD).

Exemplarily, the input end of the trans-impedance amplifier (TIA) is connected to the positive pole of the photodiode (PD), while the SD signal generator consisting of the first impedance coupling circuit, the envelope shaper and the level decision device is connected to the input end of the trans-impedance amplifier (TIA). Also, the signal output end of the SD signal generator for outputting a reset signal is separately connected to respective reset ends of the trans-impedance amplifier (TIA) and the local device MAC.

In this manner, upon receiving a burst optical signal, the photodiode (PD) converts it into a burst electrical signal, which is then single-endedly input to the trans-impedance amplifier (TIA). At the input end of the trans-impedance amplifier (TIA), the SD signal generator couples a portion of the energy, which subsequently undergoes amplitude envelope shaping and decision-making processes to generate an SD signal. This SD signal is then sent as a reset signal to the reset ends of both the trans-impedance amplifier (TIA) and the local device MAC.

In some possible embodiments, the burst-mode optical receiver of the present application further includes: a second amplifier;
the second amplifier is connected to an output end of the transimpedance amplifier;
the signal output end of the SD signal generator is separately connected to respective reset ends of the transimpedance amplifier, the local device and the second amplifier; and
the second amplifier is a linear amplifier or a limited amplifier.

In this embodiment, the burst-mode optical receiver of the present application further includes a second amplifier (LA), which may be a limited amplifier or also a linear amplifier.

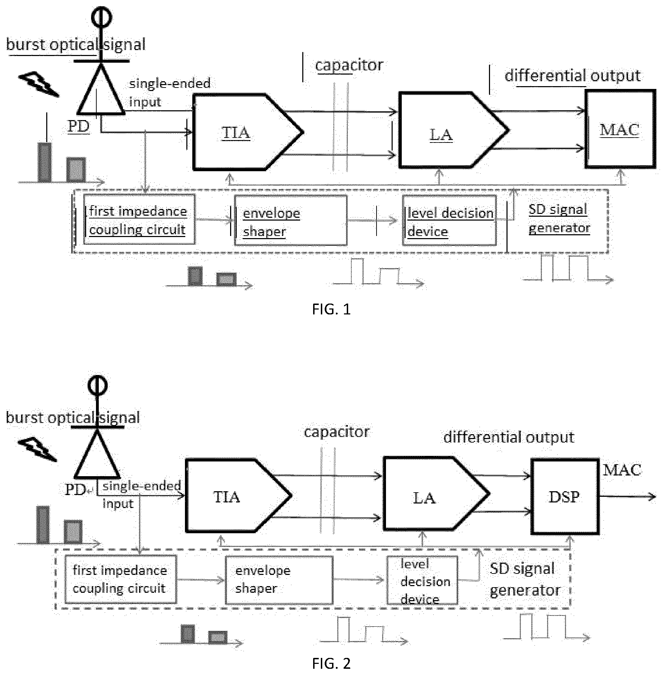

As shown in FIG. 1, the input end of the trans-impedance amplifier (TIA) is connected to the positive pole of the photodiode (PD), the second amplifier (LA) is connected to the output end of the trans-impedance amplifier (TIA), and the differential output end of the second amplifier is connected to the local device MAC.

Similarly, an SD signal generator consisting of a first impedance coupling circuit, an envelope shaper and a level decision device is connected to the input end of the trans-impedance amplifier (TIA). Also, the signal output end of the SD signal generator for outputting a reset signal is separately connected to respective reset ends of the trans-impedance amplifier (TIA), the second amplifier (LA) and the local device MAC.

Thus, the SD signal generator couples a portion of the energy at the input end of the trans-impedance amplifier (TIA) and generates the SD signal after amplitude envelope shaping and decision-making processes. The SD signal is sent as a reset signal to the reset ends of the trans-impedance amplifier (TIA), the second amplifier (LA) and the local device MAC.

In some possible embodiments, the burst-mode optical receiver of the present application further includes: a digital signal processing module;
an input end of the digital signal processing module is connected to an output end of the second amplifier, and an output end of the digital signal processing module is connected to the local device; and
the signal output end of the SD signal generator is separately connected to respective reset ends of the transimpedance amplifier, the local device, the second amplifier and the digital signal processing module.

In this embodiment, the burst-mode optical receiver of the present application further includes a Digital Signal Processing (DSP) module, the input end of which is connected to the output end of the second amplifier (LA), and the output end of which is connected to the local device MAC. In this regard, the signal output end of the SD signal generator is separately connected to respective reset ends of the trans-impedance amplifier (TIA), the local device MAC, the second amplifier LA and the digital signal processing (DSP) module.

As shown in FIG. 2, the burst-mode optical receiver of the present application may further incorporate a digital signal processing (DSP) module between the second amplifier (LA) and the local device MAC. At this time, the SD signal generated by the SD signal generator is transmitted to respective reset ends of the trans-impedance amplifier (TIA), the local device MAC, the second amplifier (LA) and the digital signal processing (DSP) module, thereby resetting the trans-impedance amplifier (TIA), the local device MAC, the second amplifier (LA) and the digital signal processing (DSP) module.

In one possible embodiment, the SD signal generator may generate the SD signal by coupling a small portion of the energy from the burst signal input to the trans-impedance amplifier (TIA) through an impedance coupling circuit. Based on this, the SD signal generator described above includes: a first impedance coupling circuit, an envelope shaper connected to the first impedance coupling circuit, and a level decision device connected to the envelope shaper;
the first impedance coupling circuit includes a first impeder and a second impeder, an input end of the first impeder is connected to the positive pole of the photodiode, an input end of the second impeder is connected to an output end of the first impeder, an output end of the second impeder is grounded;
an input end of the envelope shaper is connected to a connecting end of the first impeder and a connecting end of the second impeder; and
an input end of the level decision device is connected to an output end of the envelope shaper, and an output end of the level decision device is connected to each of the reset ends.

In this embodiment, the SD signal generator of the burst-mode optical receiver of the present application is constituted by a first impedance coupling circuit, an envelope shaper connected to the first impedance coupling circuit, and a level decision device connected to the envelope shaper.

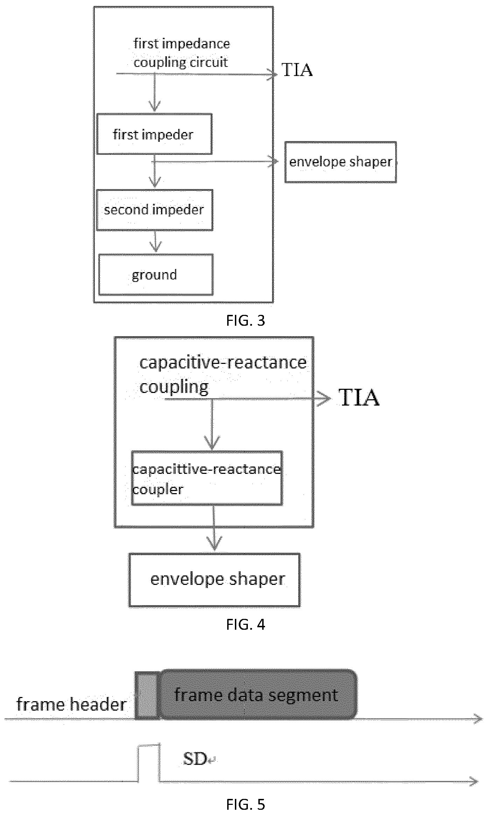

As shown in FIG. 3, the first impedance coupling circuit includes a first impeder and a second impeder, an input end of the first impeder is connected to the positive pole of the photodiode (PD), an input end of the second impeder is connected to an output end of the first impeder, an output end of the second impeder is grounded.

In this way, the burst-mode optical receiver of the present application is designed with a first impedance coupling circuit at the single-ended input end of the trans-impedance amplifier (TIA), as described above. The impedance values of the first and second impeders are set to extract a small portion of the signal energy input to the trans-impedance amplifier (TIA). For instance, by setting the impedance value of the second impeder to one-tenth of that of the first impeder, 10% of the energy can be coupled out. Subsequently, the coupled energy is transmitted to the envelope shaper for envelope shaping processing and then transmitted through the level decision device at the back end for decision-making, thereby generating an SD signal.

In another possible embodiment, the SD signal generator may also generate the SD signal by coupling a small portion of the energy from the burst signal input to the trans-impedance amplifier (TIA) through capacitive-reactance coupling. Based on this, the SD signal generator described above includes a capacitive-reactance coupler, an envelope shaper connected to the capacitive-reactance coupler, and a level decision device connected to the envelope shaper;
an input end of the capacitive-reactance coupler is connected to a positive pole of the photodiode;
an input end of the envelope shaper is connected to an output end of the capacitive-reactance coupler; and
an input end of the level decision device is connected to an output end of the envelope shaper, and an output end of the level decision device is separately connected to each of the reset ends.

In this embodiment, the SD signal generator of the burst-mode optical receiver of the present application is constituted by a capacitive-reactance coupler, an envelope shaper connected to the capacitive-reactance coupler, and a level decision device connected to the envelope shaper.

As shown in FIG. 4, the input end of the capacitive-reactance coupler is connected to the positive pole of the photodiode (PD); the input end of the envelope shaper is connected to the output end of the capacitive-reactance coupler.

Furthermore, an input end of the level decision device is connected to an output end of the envelope shaper, and an output end of the level decision device is separately connected to the respective reset ends. Thus, the burst-mode optical receiver of the present application designs the capacitive-reactance coupler as described above at the single-ended input end of the trans-impedance amplifier (TIA), and then obtains a small portion of the energy from the burst signal component input to the trans-impedance amplifier (TIA) through the capacitive-reactance coupler. The coupled-out energy is then transmitted to the envelope shaper for envelope shaping processing and the is decided by the level decision device at the back end to generate an SD signal.

Based on the different design requirements of the actual application, the burst-mode optical receiver of the present application can of course also adopt other functional modules to obtain a small amount of energy from the input end of the above-mentioned trans-impedance amplifier (TIA).

Furthermore, in an embodiment of the present application, the envelope shaper is configured to shape the burst signal coupled from the input end of the trans-impedance amplifier (TIA) by the first impedance coupling circuit or capacitive-reactance coupler into an amplitude envelope signal. The envelope shaper may, for example, conventionally be implemented using a low-pass filtering principle, in which case the filter band of the low-pass filtering is arranged to filter out the high-frequency components of the high-speed burst data signal, thereby smoothly generating the frame amplitude envelope of the burst signal.

Furthermore, in an embodiment of the present application, the level decision device is configured to compare and amplify the amplitude envelope signal of the burst data frame with the decided level, thereby obtaining the equal-amplitude reset signal.

In one embodiment, as shown in FIG. 5, the SD signal generator may of course also generate the SD signal corresponding to a duration of a frame header section by acquiring the frame header section of the burst signal based on different design requirements of the actual application.

Based on the first embodiment of the burst-mode optical receiver of the present application described above, a second embodiment of the burst-mode optical receiver of the present application is proposed.

In a second embodiment of the burst-mode optical receiver of the present application, the burst-mode optical receiver of the present application includes: a photodiode, a trans-impedance amplifier and an SD signal generator;
the trans-impedance amplifier is connected to a positive pole of the photodiode; and
the input end of the SD signal generator is connected to the output end of the trans-impedance amplifier, and the signal output end of the SD signal generator is separately connected to the respective reset ends of the trans-impedance amplifier and the local device.

In this embodiment, the input end of the trans-impedance amplifier (TIA) is connected to the positive pole of the photodiode (PD), and the SD signal generator consisting of the second impedance coupling circuit, the envelope shaper and the level decision device is connected to the input end of the trans-impedance amplifier (TIA). Similarly, the signal output end of the SD signal generator for outputting a reset signal is separately connected to respective reset ends of the trans-impedance amplifier (TIA) and the local device.

In this manner, upon receiving a burst optical signal, the photodiode (PD) converts it into a burst electrical signal, which is then single-endedly input to the trans-impedance amplifier (TIA). At the input end of the trans-impedance amplifier (TIA), the SD signal generator couples a portion of the energy, which subsequently undergoes amplitude envelope shaping and decision-making processes to generate an SD signal. This SD signal is then sent as a reset signal to the reset ends of both the trans-impedance amplifier (TIA) and the local device.

In some possible embodiments, the burst-mode optical receiver of the present application further includes: a second amplifier;
the second amplifier is connected to an output end of the transimpedance amplifier;
the signal output end of the SD signal generator is separately connected to respective reset ends of the transimpedance amplifier, the local device and the second amplifier; and
the second amplifier is a linear amplifier or a limited amplifier.

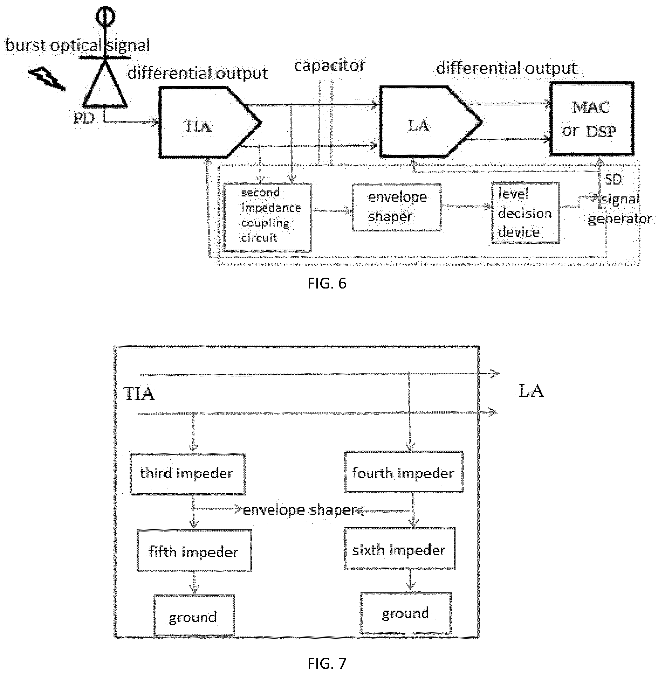

As shown in FIG. 6, in this embodiment, the input end of the trans-impedance amplifier (TIA) is connected to the positive pole of the photodiode (PD), the second amplifier (LA) is connected to the output end of the trans-impedance amplifier (TIA), and the differential output end of the second amplifier is connected to the local device MAC.

In this case, an SD signal generator consisting of a second impedance coupling circuit, an envelope shaper and a level decision device is connected to the input end of the trans-impedance amplifier (TIA). Also, the signal output end of the SD signal generator for outputting a reset signal is separately connected to respective reset ends of the trans-impedance amplifier (TIA), the second amplifier (LA) and the local device.

Thus, the SD signal generator couples a portion of the energy at the input end of the trans-impedance amplifier (TIA) and generates the SD signal after amplitude envelope shaping and decision-making processes. The SD signal is sent as a reset signal to the reset ends of the trans-impedance amplifier (TIA), the second amplifier (LA) and the local device.

In some possible embodiments, the SD signal generator includes: a second impedance coupling circuit, an envelope shaper connected to the second impedance coupling circuit, and a level decision device connected to the envelope shaper;
the second impedance coupling circuit includes a third impeder, a fourth impeder, a fifth impeder and a sixth impeder, respective impedance values of the third impeder and the fourth impeder are the same, respective impedance values of the fifth impeder and the sixth impeder are the same;
respective input ends of the third impeder and the fourth impeder are separately connected to a differential output end of the transimpedance amplifier, an input end of the fifth impeder is connected to an output end of the third impeder, an output end of the fifth impeder is grounded, an input end of the sixth impeder is connected to an output end of the fourth impeder, an output end of the sixth impeder is grounded;
a first input end of the envelope shaper is connected to a connecting end between the third impeder and the fifth impeder, and a second input end of the envelope shaper is connected to a connecting end between the fourth impeder and the sixth impeder; and
an input end of the level decision device is connected to an output end of the envelope shaper, and an output end of the level decision device is separately connected to each of the reset ends.

In this embodiment, the SD signal generator of the burst-mode optical receiver of the present application is constituted by a second impedance coupling circuit, an envelope shaper connected to the second impedance coupling circuit, and a level decision device connected to the envelope shaper.

As shown in FIG. 7, the second impedance coupling circuit includes a third impeder, a fourth impeder, a fifth impeder, and a sixth impeder. Wherein the respective impedance values of the third impeder and the fourth impeder are the same, and the respective impedance values of the fifth impeder and the sixth impeder are the same.

Besides, respective input ends of the third impeder and the fourth impeder are separately connected to a differential output end of the transimpedance amplifier, an input end of the fifth impeder is connected to an output end of the third impeder, an output end of the fifth impeder is grounded, an input end of the sixth impeder is connected to an output end of the fourth impeder, an output end of the sixth impeder is grounded.

In addition, a first input end of the envelope shaper is connected to a connecting end between the third impeder and the fifth impeder, and a second input end of the envelope shaper is connected to a connecting end between the fourth impeder and the sixth impeder; and an input end of the level decision device is connected to an output end of the envelope shaper, and an output end of the level decision device is separately connected to the respective reset ends of the trans-impedance amplifier (TIA), the second amplifier (LA), and the local device MAC (or the digital signal processing (DSP) module).

Based on this, the burst-mode optical receiver of the present application designs the second impedance coupling circuit as described above at the differential output end of the trans-impedance amplifier (TIA), and sets respective impedance values of the third impeder, the fourth impeder, the fifth impeder and the sixth impeder, wherein the impedance values of the third impeder and the fourth impeder are the same, and the impedance values of the fifth impeder and the sixth impeder are the same. In this way, a small portion of the signal energy output from the trans-impedance amplifier (TIA) will be obtained by the second impedance coupling circuit, which will then be sent to the envelope shaper for processing and decided by the level decision device at the back end to generate the SD signal.

In this embodiment, the burst-mode optical receiver of the present application achieves extraction of the SD signal at the trans-impedance amplifier (TIA) by designing the SD signal generator at the input or output end of the trans-impedance amplifier (TIA). As such, compared to the traditional approach where the physical layer link at the receiving front end, such as the optical receiver, employs the AC coupling method using the series-connected capacitors and performs signal detection at the LA, which results in the additional delay in the SD signal recovered by the physical layer link, this application utilizes the SD signal generator to couple a portion of the burst electrical signal at the trans-impedance amplifier (TIA). This enables the rapid generation of the burst SD signal for the rapid reset of both the receiving front end and the MAC layer of the OLT device, thereby effectively reducing the link delay of the ONU device during the registration phase of the PON system.

Based on the various embodiments of the burst-mode optical receiver of the present application described above, embodiments of an operation method for the burst-mode optical receiver of the present application are presented.

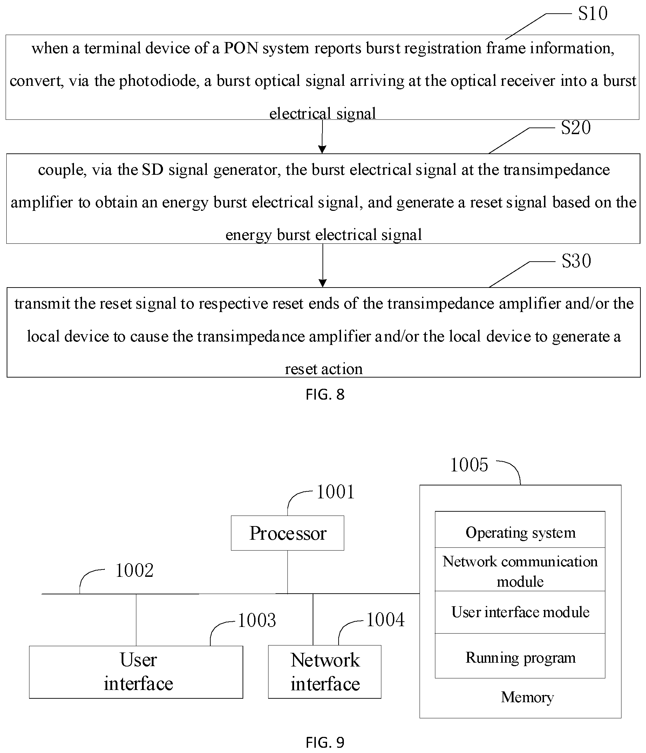

Referring now to FIG. 8, FIG. 8 is a flowchart illustrating a first embodiment of an operation method for a burst-mode optical receiver. Although a logical order is shown in the flowchart, in some instances, the steps shown or described may be performed in an order other than that herein.

Further, in this embodiment, an execution body of the operation method for the burst-mode optical receiver may be the above-described burst-mode optical receiver itself, or may be a terminal device in which the burst-mode optical receiver is integrated, or a control apparatus on the terminal device. For ease of explanation and reading comprehension, embodiments of the charge-discharge equalization method of the present application will be described hereinafter with an optical receiver as the execution body.

As shown in FIG. 8, an operation method for a burst-mode optical receiver according to an embodiment of the present application may include the following steps:
Step S10: when a terminal device of a PON system reports burst registration frame information, a burst optical signal arriving at the optical receiver is converted into a burst electrical signal via the photodiode.

In this embodiment, when the PON system operates in the uplink registration phase and the burst registration frame information is reported by the terminal device, the optical receiver starts to perform the fast SD function. That is, the optical receiver first converts the received burst optical signal into a burst electrical signal by the photodiode (PD).

Step S20: the SD signal generator couples the burst electrical signal at the transimpedance amplifier to obtain an energy burst electrical signal, and a reset signal is generated based on the energy burst electrical signal.

In the present embodiment, after the optical receiver has converted the burst optical signal into the burst electrical signal by the photodiode (PD), the optical receiver further obtains an energy burst signal by coupling a small portion of energy of the burst electrical signal at the trans-impedance amplifier (TIA) through the SD signal generator connected to the output end of the photodiode (PD), and further the SD signal generator performs envelope shaping processing on the energy burst signal to generate a reset signal.

Step S30: the reset signal is transmitted to respective reset ends of the transimpedance amplifier and/or the local device to cause the transimpedance amplifier and/or the local device to generate a reset action.

In this embodiment, after the optical receiver extracts the reset signal from the trans-impedance amplifier (TIA) through the SD signal generator, the optical receiver may transmit the reset signal back to the respective reset ends of the trans-impedance amplifier (TIA) and/or the external MAC to cause the trans-impedance amplifier (TIA) and/or the external MAC to generate a reset action based on the reset signal.

In this embodiment, when the PON system operates in the uplink registration phase, the optical receiver can start performing the fast SD function. When no terminal device ONU in the PON system reports burst registration information, the optical signal arriving at the receiving front-end of the OLT is leaked light of the upstream laser in the off-state. At this point, the optical signal is very weak, the electrical signal coupled by the SD signal generator from the trans-impedance amplifier (TIA) is very small, thus, the output level of the envelope shaper will be lower than the decision level, causing the SD signal output by the SD signal generator to be at a low level. Subsequently, the receiving front-ends of the OLT, which include the trans-impedance amplifier (TIA), the linear amplifier (or a limited amplifier), the local device MAC, and/or the digital signal processing (DSP) module, will not generate a reset action under these circumstances.

When a single terminal device ONU in the PON system reports the burst registration frame information, the burst optical signal arriving at the receiving front-end of the OLT is received by the photodiode (PD) and converted into a burst electrical signal, which is then sent to the single-ended input end of the trans-impedance amplifier (TIA). At this moment, the SD signal generator can couple a small portion of the burst electrical signal from the trans-impedance amplifier (TIA) and send it to the envelope shaper. During the period when the burst registration frame information is effective, the output level of the envelope shaper will be higher than the decision level. Consequently, the SD signal output by the SD signal generator becomes a high-level reset signal, prompting the aforementioned receiving front-ends of the OLT to generate a corresponding reset action accordingly.

In this manner, the operation method for the burst-mode optical receiver provided by the embodiments of the present application can expedite the process of recovering the burst registration frame information for the OLT MAC, thereby achieving low-delay registration for a single terminal device ONU.

In some possible embodiments, the step S20 that the SD signal generator couples the burst electrical signal at the transimpedance amplifier to obtain the energy burst electrical signal may include:
Step S201: the SD signal generator couples, at an input end of the transimpedance amplifier, a portion of the burst electrical signal input by the photodiode to the transimpedance amplifier to obtain an energy burst electrical signal.

In the present embodiment, when the optical receiver extracts the reset signal from the trans-impedance amplifier (TIA) by the SD signal generator, if the optical receiver currently connects the SD signal generator at the input end of the trans-impedance amplifier (TIA), then the optical receiver couples, at an input end of the trans-impedance amplifier (TIA), a portion of the burst electrical signal input by the photodiode (PD) to the transimpedance amplifier to obtain an energy burst electrical signal via the SD signal generator.

Step S202: the SD signal generator, at an output end of the transimpedance amplifier, couples a portion of the burst electrical signal input by the photodiode to the transimpedance amplifier and amplified by the transimpedance amplifier to obtain an energy burst electrical signal.

In the present embodiment, when the optical receiver extracts the reset signal from the trans-impedance amplifier (TIA) by the SD signal generator, if the optical receiver currently connects the SD signal generator at the triggering output end of the trans-impedance amplifier (TIA), then the optical receiver couples, at a differential output end of the trans-impedance amplifier (TIA), a portion of the burst electrical signal input by the photodiode (PD) to the transimpedance amplifier and further amplified by the transimpedance amplifier to obtain the energy burst electrical signal via the SD signal generator.

In this embodiment, during the process where the SD signal generator extracts the SD signal from the trans-impedance amplifier (TIA) to reset the various receiving front-ends of the OLT, the optical signals arriving at the receiving front-ends of the OLT from different terminal device ONUs vary in magnitude. This results in significant amplitude differences among different frame signals input to the trans-impedance amplifier (TIA), and the trans-impedance amplifier (TIA) needs to adjust its gain according to the signal magnitude. To this end, when an SD signal pulse is sent to the trans-impedance amplifier (TIA), the trans-impedance amplifier (TIA) can synchronously obtain the arrival time of the frame header. At this moment, the trans-impedance amplifier (TIA) adjusts its gain based on the signal magnitude at that time. If there is no SD signal, the gain adjustment of the trans-impedance amplifier (TIA) would be relatively slow.

Furthermore, the linear amplifier (LA) or the limited amplifier (LA) and the trans-impedance amplifier (TIA) are similar, i.e., the amplifier (LA) is adjusted accordingly according to the SD signal, and without the SD signal, the adjustment of the amplifier (LA) is slow.

Similarly, the first stage of the local device MAC for receiving the data frames is a BCDR (burst clock data recovery) unit, which also readjusts the burst clock recovery function based on the SD signal in synchronization with the time of the frame header section of the frame signal. Without the SD signal, the BCDR's clock recovery would be slow. The digital signal processing (DSP) module has a BCDR (burst clock data recovery) function inside it, and naturally, it needs to readjust its burst clock recovery function according to the frame header section signal of the frame signal. Without the SD signal, the BCDR's clock recovery would be very slow.

Thus, when a plurality of terminal device ONUs simultaneously report the burst registration frame information, the hybrid burst optical signal arriving at the receiving front ends of the OLT, such as the trans-impedance amplifier (TIA), the amplifier (LA), the local device MAC and/or the digital signal processing (DSP) module, is received by the photodiode (PD) and converted into a hybrid burst electrical signal to the single-ended input end of the trans-impedance amplifier (TIA). At this point, the SD signal generator couples a small portion of the burst electrical signal from the trans-impedance amplifier (TIA) (input or output end), and sends it to the envelope shaper. During the period when multiple pieces of burst registration frame information is effective, the output level of the envelope shaper will be higher than the decision level. Consequently, the SD signal output by the SD signal generator becomes a high-level reset signal, prompting the aforementioned receiving front-ends of the OLT to generate a corresponding reset action accordingly upon receiving the high-level reset signal.

In addition, based on different design needs of practical applications, the SD signal outputted by the SD signal generator can of course also adopt a low-level active reset operation mode.

In this embodiment, the operation method for the burst-mode optical receiver of the present application extracts the SD signal at the input or output end of the trans-impedance amplifier (TIA) by the SD signal generator to reset the trans-impedance amplifier (TIA), the linear amplifier (LA) or the limited amplifier (LA), the local device MAC or the digital signal processing (DSP) module. As such, compared to the traditional approach where the physical layer link at the receiving front end employs the AC coupling method using the series-connected capacitors to perform signal detection, which results in the additional delay in the SD signal recovered by the physical layer link, this application utilizes the SD signal generator to couple a portion of the burst electrical signal at the trans-impedance amplifier. This enables the rapid generation of the burst SD signal for the rapid reset of both the receiving front end and the MAC layer of the OLT device, thereby effectively reducing the link delay of the ONU device during the registration phase of the PON system.

In addition, the present application also provides a terminal device. Please refer to FIG. 9, which is a schematic diagram of a device structure of the hardware operating environment for a terminal device involved in the embodiment solution of the present application.

The terminal device provided by the embodiment may be a PC (PerSonal Computer), a tablet computer, a portable computer, a smartphone, or the like.

As shown in FIG. 9, the terminal device may include a processor 1001, e.g., a CPU, a communication bus 1002, a user interface 1003, a network interface 1004, a memory 1005. Wherein, the communication bus 1002 is used to enable communication of connections between these components. The user interface 1003 may include a Display, an input unit such as a Keyboard, a standard wired interface, a wireless interface. The network interface 1004 may include a standard wired interface, a wireless interface (e.g., a Wi-Fi interface). The memory 1005 may be a high-speed RAM memory or may be a non-volatile memory, such as a magnetic disk memory. The memory 1005 may also be a storage independent of the aforementioned processor 1001.

It will be appreciated by those skilled in the art that the structure shown in FIG. 9 does not constitute a limitation of the terminal device, and that the terminal device provided herein may include more or fewer components than illustrated, or a combination of certain components, or a different arrangement of components.

As shown in FIG. 9, the memory 1005, which is a computer storage medium, may include an operating system, a network communication module, a user interface module, and a running program.

In the terminal shown in FIG. 9, the network interface 1004 is mainly used for connecting the backend server and performing data communication with the backend server; the user interface 1003 is mainly used for connecting the client and performing data communication with the client; the processor 1001 may be configured to invoke the running program stored in the memory 1005 and perform the steps of the embodiment of the operation method for the burst-mode optical receiver of the present application described above.

In addition, the present application also provides a computer storage medium having stored thereon a running program which, when executed by a processor, implements the steps of the operation method for a burst-mode optical receiver according to any one of the above embodiments.

Specific embodiments of the computer storage medium of the present application are substantially the same as the above-described embodiments of the operation method for a burst-mode optical receiver, and will not be described further herein.

The present application also provides a computer program product including a computer program which, when executed by a processor, implements the steps of the operation method for a burst-mode optical receiver as described in any of the above embodiments.

Specific embodiments of the computer program product of the present application are substantially the same as the embodiments of the operation method for a burst-mode optical receiver described above, and will not be described further herein.

The above are merely optional embodiments of the present application, and does not limit the patent scope of the present application. Any equivalent structure or equivalent flow transformation made by using the contents of the specification and drawings of the present application, or directly or indirectly applied to other related technical fields, is included in the patent protection scope of the present application in the same way.

## Claims

1. A burst-mode optical receiver, wherein the burst-mode optical receiver comprises: a photodiode, a first amplifier, and an SD signal generator;
the first amplifier is a trans-impedance amplifier, an input end of the trans-impedance amplifier is connected to a positive pole of the photodiode; and
an input end of the SD signal generator is connected to the input end of the trans-impedance amplifier; and a signal output end of the SD signal generator is separately connected to respective reset ends of the trans-impedance amplifier and a local device.

2. The burst-mode optical receiver according to claim 1, wherein the burst-mode optical receiver further comprises: a second amplifier;
the second amplifier is connected to an output end of the trans-impedance amplifier;
the signal output end of the SD signal generator is separately connected to respective reset ends of the trans-impedance amplifier, the local device and the second amplifier; and
the second amplifier is a linear amplifier or a limited amplifier.

3. The burst-mode optical receiver according to claim 2, wherein the burst-mode optical receiver further comprises: a digital signal processing module;
an input end of the digital signal processing module is connected to an output end of the second amplifier, and an output end of the digital signal processing module is connected to the local device; and
the signal output end of the SD signal generator is separately connected to respective reset ends of the trans-impedance amplifier, the local device, the second amplifier and the digital signal processing module.

4. The burst-mode optical receiver according to any one of claims 1 to 3, wherein the SD signal generator comprises: a first impedance coupling circuit, an envelope shaper connected to the first impedance coupling circuit, and a level decision device connected to the envelope shaper;
the first impedance coupling circuit comprises a first impeder and a second impeder, an input end of the first impeder is connected to the positive pole of the photodiode, an input end of the second impeder is connected to an output end of the first impeder, an output end of the second impeder is grounded;
an input end of the envelope shaper is connected to a connecting end of the first impeder and a connecting end of the second impeder; and
an input end of the level decision device is connected to an output end of the envelope shaper, and an output end of the level decision device is connected to each of the reset ends.

5. The burst-mode optical receiver according to any one of claims 1 to 3, wherein the SD signal generator comprises a capacitive-reactance coupler, an envelope shaper connected to the capacitive-reactance coupler, and a level decision device connected to the envelope shaper;
an input end of the capacitive-reactance coupler is connected to the positive pole of the photodiode;
an input end of the envelope shaper is connected to an output end of the capacitive-reactance coupler; and
an input end of the level decision device is connected to an output end of the envelope shaper, and an output end of the level decision device is separately connected to each of the reset ends.

6. A burst-mode optical receiver, wherein the burst-mode optical receiver comprises: a photodiode, a trans-impedance amplifier, and an SD signal generator;
the trans-impedance amplifier is connected to a positive pole of the photodiode; and
an input end of the SD signal generator is connected to an output end of the trans-impedance amplifier, and a signal output end of the SD signal generator is separately connected to respective reset ends of the trans-impedance amplifier and a local device.

7. The burst-mode optical receiver according to claim 6, wherein the SD signal generator comprises: a second impedance coupling circuit, an envelope shaper connected to the second impedance coupling circuit, and a level decision device connected to the envelope shaper;
the second impedance coupling circuit comprises a third impeder, a fourth impeder, a fifth impeder and a sixth impeder, respective impedance values of the third impeder and the fourth impeder are the same, respective impedance values of the fifth impeder and the sixth impeder are the same;
respective input ends of the third impeder and the fourth impeder are separately connected to a differential output end of the trans-impedance amplifier, an input end of the fifth impeder is connected to an output end of the third impeder, an output end of the fifth impeder is grounded, an input end of the sixth impeder is connected to an output end of the fourth impeder, an output end of the sixth impeder is grounded;
a first input end of the envelope shaper is connected to a connecting end between the third impeder and the fifth impeder, and a second input end of the envelope shaper is connected to a connecting end between the fourth impeder and the sixth impeder; and
an input end of the level decision device is connected to an output end of the envelope shaper, and an output end of the level decision device is separately connected to each of the reset ends.

8. An operation method for a burst-mode optical receiver, wherein the operation method is applied to the burst-mode optical receiver according to any one of claims 1 to 5 or 6 to 7, the operation method comprising:
when a terminal device of a PON system reports burst registration frame information, converting, via the photodiode, a burst optical signal arriving at the optical receiver into a burst electrical signal;
coupling, via the SD signal generator, the burst electrical signal at the trans-impedance amplifier to obtain an energy burst electrical signal, and generating a reset signal based on the energy burst electrical signal; and
transmitting the reset signal to respective reset ends of the trans-impedance amplifier and/or the local device to cause the trans-impedance amplifier and/or the local device to generate a reset action.

9. The operation method for a burst-mode optical receiver according to claim 8, wherein the step of coupling, via the SD signal generator, the burst electrical signal at the trans-impedance amplifier to obtain an energy burst electrical signal comprises:
coupling, via the SD signal generator, at an input end of the trans-impedance amplifier, a portion of the burst electrical signal input by the photodiode to the trans-impedance amplifier to obtain an energy burst electrical signal;
or,
coupling, via the SD signal generator, at an output end of the trans-impedance amplifier, a portion of the burst electrical signal input by the photodiode to the trans-impedance amplifier and amplified by the trans-impedance amplifier to obtain an energy burst electrical signal.

10. A computer storage medium having stored thereon a running program which, when executed by a processor, implements the steps of the operation method for a burst-mode optical receiver according to claim 8 or 9.
